# EUROPEAN PATENT SPECIFICATION

(11) **EP 3 862 793 B1**
(45) Date of publication and mention of the grant of the patent: **27.12.2023**
(21) Application number: 21166901.5
(22) Date of filing: 13.04.2017
(51) Int. Cl.: G01S 19/41, G05D 1/02, G05B 19/418, G01S 5/00, G01S 19/07

(54) **INTELLIGENT DEVICE AND DIFFERENTIAL GLOBAL POSITIONING SYSTEM**
INTELLIGENTES GERÄT UND DIFFERENZIELLES GLOBALES POSITIONIERUNGSSYSTEM
APPAREIL INTELLIGENT ET SYSTÈME DE POSITIONNEMENT GLOBAL DIFFÉRENTIEL

(30) Priority: 13.04.2016 CN 201610227219
(43) Date of publication of application: 11.08.2021
(62) Divisional of application: 17781927.3
(73) Proprietor: Positec Power Tools (Suzhou) Co., Ltd, Suzhou, Jiangsu 215123 (CN)
(72) Inventor: HE, Mingming, Suzhou, Jiangsu 215123 (CN); TAN, Yiyun, Suzhou, Jiangsu (CN)
(74) Representative: Dentons UK and Middle East LLP

(56) References cited:
- US-A1- 2008 262 670
- US-A1- 2012 050 104
- US-A1- 2013 041 549

## Description

### BACKGROUND

### Technical Field

The present invention relates to the field of accurate positioning, and in particular to a differential global positioning system in a certain area, and a positioning method of the differential global positioning system.

### Related Art

With the development of technologies for global positioning systems (GPS, Beidou, and the like), in order to achieve more accurate positioning, more and more people use a differential global positioning system (DGPS) to implement accurate positioning of moving objects.

The differential global positioning system (DGPS) implements observation by using a GPS receiver disposed on a base station. Based on the known precision coordinates of the base station, the deviation correction data from the base station to the satellite is calculated, and the data is transmitted by the base station in real time. A user receiver also receives the correction data sent by the base station while performing GPS observation, and corrects a positioning result to improve the positioning accuracy.

There are currently two manners to apply the differential global positioning system (DGPS) on a machine. One is to use a self-built base station, which transmits differential correction data to correct measurement errors for high-accuracy positioning. However, in this way, for an individual user, a machine needs an independent base station, so the cost is too high, and each base station requires large space. Another manner is to use Continuously Operating Reference Stations (CORS) to achieve high-accuracy positioning based on data transmission between a machine and a CORS base station. However, for an individual user, CORS signals transmitted by the CORS base station are a paid service requiring additional fee, so the usage cost is high.

US2008262670A1 discloses a system and method for monitoring vehicle parameters and driver behavior. A housing comprising an accelerometer unit and a GPS unit is adapted to be mounted in a window of the vehicle. The system is adapted to be powered by an on-board diagnostic system of the vehicle.

US 2012/050104 A1 discloses a GNSS smart antenna system including an antenna, a processor and a receiver combination unit adapted for economical construction and enhanced performance when performing differential guidance operations. The antenna unit includes a dual frequency antenna, a dual frequency receiver unit, dual processors, and a radio bay for receiving a radio device. Rover and base smart antenna units are interchangeable in the system.

### SUMMARY

In view of the above, it is necessary to provide a differential global positioning system and a positioning method of the differential global positioning system for the problem of high usage cost of a differential global positioning system.

The present invention provides an intelligent device being a self-moving lawn mower and comprising a shell and a mobile station connected to the shell, the intelligent device being in communication connection with a base station via the mobile station. The mobile station is detachably connected with the intelligent device such that when the mobile station is connected to the shell, positioning data of the intelligent device at a current location is obtained, and when the mobile station is detached from the shell and located at a specific location, positioning data at the specific location is obtained. The intelligent device comprises receivers integrated on the mobile station for receiving respectively: satellite-based positioning signals sent by a satellite-based positioning system to obtain positioning data of the corresponding intelligent device at a current location, and differential correction data sent by the base station

There is also disclosed in the following a differential global positioning system, comprising a base station and at least one intelligent device, wherein the base station is configured to set first positioning data thereof when the base station is arranged at a fixed location, and the base station comprises a first signal receiver; wherein the first signal receiver receives satellite-based positioning signals sent by a satellite system to obtain second positioning data of the base station, and the base station obtains differential correction data according to a measurement error between the first positioning data and the second positioning data, and the base station is in communication connection with at least two intelligent devices to transmit the corresponding differential correction data to the at least two intelligent devices.

The at least one intelligent device may comprise an encoding module for encoding the corresponding intelligent device to obtain codes; and the base station determines whether to transmit the differential correction data to the corresponding intelligent device according to whether the codes match preset data information of the base station.

The base station may comprise a sending module for sending the differential correction data to the intelligent device, and a control module for storing the codes of the intelligent device, and controlling whether the sending module sends the differential correction data to the intelligent device according to the codes provided by the intelligent device.

The differential global positioning system may comprise at least two transmission paths for transmitting the corresponding differential correction data to the corresponding intelligent devices; wherein when the base station receives a request instruction sent by a corresponding intelligent device for obtaining the differential correction data, the base station instructs the corresponding intelligent device to obtain the corresponding differential correction data through a corresponding transmission path.

In one embodiment, the intelligent device comprises an inertial navigation system.

In one embodiment, a distance between the intelligent device and the satellite-based positioning system is equal to a distance between the base station and the satellite-based positioning system.

An angle formed by a line connecting the base station and the satellite-based positioning system and a line connecting the intelligent device and the satellite-based positioning system may be less than or equal to 0.3 degree.

The differential global positioning system can accurately locate an intelligent device. A base station can establish communications with multiple intelligent devices, so the differential global positioning system is expandable, and can connect to multiple intelligent devices or have multiple intelligent devices added thereto according to actual conditions. This is equivalent to setting up a regional differential global positioning network, thereby eliminating the need to establish a base station for each intelligent device and greatly saving costs. The number of intelligent devices may be added or reduced as needed, and a coverage of the base station can be adjusted to make the differential positioning more flexible and convenient.

There is also disclosed in the following a differential global positioning system, comprising a base station, wherein the base station is configured to set first positioning data thereof when the base station is arranged at a fixed location, and the base station comprises a first signal receiver; wherein the first signal receiver receives satellite-based positioning signals sent by a satellite-based positioning system to obtain second positioning data of the base station, and the base station obtains differential correction data according to a measurement error between the first positioning data and the second positioning data, and the base station is in communication connection with at least two intelligent devices to transmit the corresponding differential correction data to the at least two intelligent devices.

At least one of the at least two intelligent devices may comprise an encoding module for encoding the corresponding intelligent device to obtain codes; and the base station determines whether to transmit the differential correction data to the corresponding intelligent device according to whether the code matches preset data information of the base station.

The differential global positioning system may comprise at least two transmission paths for transmitting the corresponding differential correction data to the corresponding intelligent devices; wherein when the base station receives a request instruction sent by the corresponding intelligent devices for obtaining the differential correction data, the base station instructs the at least two intelligent devices to obtain the corresponding differential correction data through different transmission paths.

Each intelligent device may comprise a shell and a mobile station connected to the shell, and the base station is in communication connection with the intelligent device via the mobile station.

There is also disclosed in the following a positioning method of a differential global positioning system, the differential global positioning system comprising a base station, wherein the base station is configured to set first positioning data thereof when the base station is located at a fixed location, and the base station is in communication connection with at least one intelligent device; the base station further comprises an analysis module, and each intelligent device comprises a processing module, wherein the positioning method comprises at least following steps:
Step 1: data acquisition: obtaining second positioning data of the base station according to satellite-based positioning signals sent by a satellite-based positioning system, and transmitting the first positioning data and the second positioning data to the analysis module of the base station; and
Step 2: data analysis: receiving and analyzing, by the analysis module of the base station, the first positioning data and the second positioning data in the step 1 to obtain differential correction data of the base station, and transmitting the obtained differential correction data to the processing module of the at least one intelligent device.

In one embodiment, the positioning method of a differential global positioning system further comprising step 3: data processing: receiving, by the processing module of the intelligent device, the differential correction data, and correcting, according to the differential correction data, positioning data of the corresponding intelligent device at a current location obtained by the corresponding intelligent device by receiving the satellite-based positioning signals.

The intelligent device may further comprise an instruction module, and the positioning method further comprises step 4: instruction issuing: feeding back the positioning data corrected by the intelligent device to the instruction module, and controlling, by the instruction module, a moving path of the intelligent device, and sending out an execution instruction.

The intelligent device may further comprise an execution module, and the positioning method further comprises step 5: instruction execution: receiving, by the execution module, the instruction issued by the instruction module, and triggering the intelligent device to travel according to the obtained moving path.

The at least one intelligent device may comprise an encoding module, and the encoding module is configured to encode the corresponding intelligent device to obtain a code; and the step 2 further comprises: when the analysis module of the base station obtains the differential correction data of the base station through analysis, determining, by the base station, whether to transmit the differential correction data to the corresponding intelligent device according to whether the code matches preset data information of the base station.

The base station may comprise a sending module for sending the differential correction data to the intelligent device, and a control module for storing the code of the intelligent device, and controlling whether the sending module sends the differential correction data to the intelligent device according to the code provided by the intelligent device.

The differential global positioning system may comprise at least two transmission paths for transmitting the differential correction data to the corresponding intelligent devices, and between the step 2 and the step 3, the method further comprises: sending, by the corresponding intelligent device, an instruction to the base station to request for the differential correction data, and receiving, by the base station, the instruction, and instructing the corresponding intelligent device to obtain the corresponding differential correction data through a corresponding transmission path.

The number of the transmission paths may be less than or equal to the number of the intelligent devices.

The intelligent device may comprise a shell and a mobile station connected to the shell, and the base station is in communication connection with the intelligent device via the mobile station.

The processing module, the instruction module, and the execution module of the intelligent device may be integrated on a mobile station of each intelligent device.

The second positioning data may change with the time of the satellite-based positioning signals transmitted by the satellite-based positioning system.
the positioning data obtained by the intelligent device by receiving the satellite-based positioning signals sent by the satellite-based positioning system may change with the time when the positioning signals are transmitted by the satellite-based positioning system.

In the positioning method of a differential global positioning system, a base station can implement positioning of multiple intelligent devices, thereby greatly reducing the cost for positioning the intelligent devices.

### BRIEF DESCRIPTION OF THE DRAWINGS

FIG. 1 is a schematic diagram illustrating the structure of a differential global positioning system according to an embodiment;
FIG. 2 is a schematic diagram illustrating the structure of an intelligent device equipped with a differential global positioning system according to an embodiment; and
FIG. 3 is a schematic diagram illustrating the operation of the differential global positioning system of the embodiment shown in FIG. 2.

### DETAILED DESCRIPTION

In order to make the objectives, features, and advantages of the present invention more obvious and comprehensible, embodiments of the present invention are described in detail below with reference to the drawings.

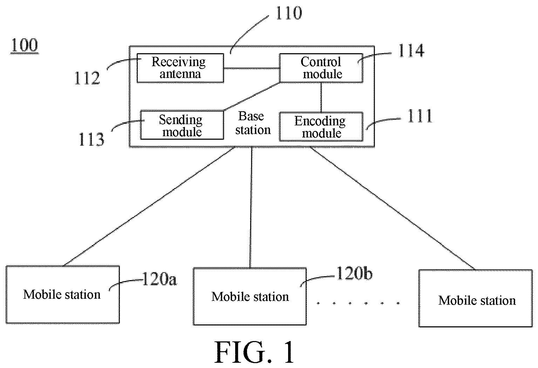

FIG. 1 is a schematic diagram illustrating the structure of a differential global positioning system according to an embodiment of the present invention. As shown in FIG. 1, a differential global positioning system 100 includes a base station 110. Certainly in this embodiment, the differential global positioning system further includes at least one intelligent device. The base station 110 is in communication connection with at least one intelligent device. Specifically, the intelligent device is a self-moving device 220. Certainly in other embodiments, the self-moving device may also be an intelligent robot or the like. The self-moving device 200 and the base station 110 may receive a satellite-based positioning signal from a satellite-based positioning system to achieve positioning. In this embodiment, a satellite-based positioning system is a GPS satellite 300, and the base station 110 and the self-moving device 200 receive the GPS positioning signal from the satellite-based positioning system to implement the GPS positioning. Certainly the satellite-based positioning system may also be a Galileo satellite navigation system, a Beidou satellite navigation system, or GLONASS.

The base station 110 transmits differential correction information to the self-moving device 200 to implement differential satellite-based positioning. Specifically, the base station 110 is configured to have a fixed accurate position when the base station is arranged at a fixed location, and the location is defined as first positioning data of the base station 110. In this embodiment, the first positioning data is represented by coordinate values, specifically (x1, y1). The base station 110 includes a first signal receiver (not shown), and the first signal receiver receives the satellite-based positioning signal sent by the satellite-based positioning system to obtain second positioning data of the base station 110. In this embodiment, the second positioning data is represented by coordinate values, specifically (x2, y2). Herein, the first signal receiver is a GPS signal receiver. Differential correction data e may be obtained according to a measurement error between the first positioning data (x1, y1) and the second positioning data (x2, y2). The base station 110 may be in communication connection with at least two self-moving devices 200 to transmit the corresponding differential correction data e to the at least two self-moving devices 200. It should be noted that generally the second positioning data obtained by the base station 110 according to the received GPS positioning signal sent by the satellite-based positioning system is a variable, which changes with the time when the GPS positioning signal is transmitted by the satellite-based positioning system, so that during the operation of the self-moving devices, the base station continuously transmits the differential correction data e to the self-moving devices 200, and the self-moving devices correct positioning data that is obtained by the satellite-based positioning system by receiving the GPS-based positioning signal in real time according to the obtained differential correction data.

Each self-moving device 200 includes a second signal receiver (not shown) and a third signal receiver (not shown) disposed separately, where the second signal receiver is configured to receive the GPS positioning signal from the satellite-based positioning system to obtain the positioning data of the corresponding self-moving device 200, and the third signal receiver is configured to receive the differential correction data sent by the base station 110. The self-moving device 200 further includes a shell (not labeled) and a mobile station 120 connected to the shell, and the base station 110 establishes a communication connection with the self-moving device 200 via the mobile station 120. The second signal transmitter and the third signal transmitter are integrated on the mobile station 120 of each self-moving device 200. In this embodiment, the mobile station 120 is detachably connected with the self-moving device 200. The mobile station 120 is accommodated in the shell, and when the mobile station 120 is installed in the shell of the self-moving device 200, the positioning data of the self-moving device 200 at a current location may be output according to the received GPS positioning signal. Certainly in other embodiments, the mobile station 120 may also be located outside the shell of the self-moving device 200, and a user can move the corresponding mobile station 120 to a specific location to obtain location data at the specific location.

The differential global positioning system 100 needs to establish only one base station 110, and communicates the at least two self-moving devices 200 by using the base station 110 to achieve accurate positioning of the self-moving devices 200. The base station 110 can establish communications with multiple self-moving devices 200, so the differential global positioning system 110 is expandable, and can connect to multiple self-moving devices 200 or have multiple self-moving devices 200 added thereto according to actual conditions. This is equivalent to setting up a regional differential global positioning network, thereby eliminating the need to establish the base station 120 for each self-moving devices 200 and greatly saving costs. The number of self-moving devices 200 can be increased or reduced as needed, and the coverage of the base station 120 can be adjusted to make the differential positioning more flexible and convenient.

In an embodiment, transmission of differential correction data information between the base station 110 and the self-moving device 200 does not require additional operation procedures. As long as the base station 110 exists and the self-moving device 200 is set within the coverage of the base station 110, the mobile station 120 on the self-moving device 200 receives the differential correction data in real time or within a preset time period, and corrects positioning data obtained by the corresponding self-moving device 200 by receiving the GPS positioning signal according to the corresponding differential correction data to ensure accurate positioning of the current location of the corresponding self-moving device in real time or within a preset time period. The following is a schematic illustration of the embodiment. The corresponding differential correction data obtained by the base station 110 may be understood as being transmitted to the outside in the form of a radio message or broadcast. Within the coverage of the base station 110, the self-moving device 200 receives the differential correction data sent by the base station 110 in real time or within a preset period of time without an intermediate program, and corrects the positioning data of the self-moving device 220 at the current location according to the received differential correction data.

In an embodiment, a communication connection between at least one of the at least two mobile devices 200 and the base station 110 requires a key process. Specifically, as shown in FIG.1, at least one self-moving device 200 includes an encoding module 111 for encoding the corresponding self-moving device 200 to obtain a code, and the base station 110 determines whether to transmit the differential correction data to the self-moving device 200 according to whether the code matches preset data information of the base station 110. Further, the base station 110 includes a sending module 113 and a control module 114. The sending module 113 is configured to send the differential correction data to the self-moving device 200, and the control module 113 is configured to store the code of the self-moving device, and control whether the sending module sends the differential correction data to the self-moving device 200 according to the code provided by the self-moving device 200. In this embodiment, the encoding module of the self-moving device 200 is disposed on the mobile station 120. Certainly in other embodiments, the encoding module and the mobile station 120 may also be disposed independently on the self-moving device 200. The following is an illustration of this embodiment. For example, there exist two self-moving devices 200, and both self-moving devices 200 have a mobile station. Specifically one self-moving device has a mobile station 120a, and the other self-moving device has a mobile station 120b. The base station 110 determines whether to establish communication with the mobile stations 120a and 120b according to whether the code of the mobile stations 120 is correct. When the code of the mobile station 120a received by the base station 110 is correct, the differential correction data is transmitted to the mobile station 120a; otherwise, the mobile station 120a may not obtain the corresponding differential correction data or obtain a wrong random code. Similarly when the code of the mobile station 120b received by the base station 110 is correct, the differential correction data is transmitted to the mobile station 120b; otherwise, the mobile station 120b may not obtain the corresponding differential correction data or obtain a wrong random code.

In an embodiment, the code of the mobile stations 120 within the coverage of the same base station 110 is uniquely identified so as to ensure the security and reliability of the established communication.

In an embodiment, the differential global positioning system 100 includes at least two transmission paths for transmitting corresponding differential correction data to corresponding self-moving devices 200. The number of the transmission paths is less than or equal to the number of the self-moving devices 200. When the base station 110 receives a request instruction sent by a corresponding self-moving device 200 for obtaining the differential correction data, the base station 110 instructs the self-moving device 200 to obtain the corresponding differential correction data through a corresponding transmission path. Further, when at least two self-moving devices 200 need to obtain differential correction data, and the format of the differential correction data to be obtained by the at least two self-moving devices 200 is the same, the base station 110 receives request instructions sent by the corresponding self-moving devices 200 for obtaining the differential correction data, and instructs the at least two self-moving devices 200 to obtain the corresponding differential correction data through any transmission path. When at least two self-moving devices 200 need to obtain differential correction data, and the formats of the differential correction data to be obtained by the at least two self-moving devices 200 are different, the base station 110 instructs the at least two self-moving devices 200 to obtain the corresponding differential correction data through different transmission paths. Further, the base station 110 also includes an identification module. When a self-moving device 200 sends a request instruction for obtaining differential correction data to the base station 110, the base station 110 determines whether the self-moving device satisfies a condition for receiving the differential correction data. Specifically, the condition may be whether the self-moving device 200 and the base station 110 have reached a differential data transmission license agreement. If the identification module determines that the self-moving device 200 has a differential data transmission permission from the base station 110, the base station 110 may successfully send the corresponding differential correction data to the self-moving device 200; if the identification module determines that the self-moving device 200 does not have the differential data transmission permission from the base station 110, the base station 110 cannot successfully send the corresponding differential correction data to the self-moving device 200, that is, the transmission path is automatically cut off. The following is a schematic illustration of this embodiment. The corresponding differential correction data obtained by the base station 110 may be understood as being transmitted to the outside in the form of a radio message or broadcast, and the at least two transmission paths may be understood as different frequency bands. When multiple self-moving devices 200 send requests for obtaining the corresponding differential correction data to the base station 110, the base station 110 receives the requests, and informs the corresponding self-moving devices 200 of the transmission paths at certain frequency bands through which the self-moving devices 200 can obtain the differential correction data.

In the differential global positioning system 100 in this design, the base station may define different receiving formats for different self-moving devices 200, and cut off the transmission paths of the self-moving devices 200 that do not have the permission in time. At the same time, other self-moving devices 200 with the permission can normally receive the differential correction data information. Therefore, this embodiment ensures that the self-moving devices of different models and different specifications can successfully receive the correct differential correction data. In another aspect, the base station 110 ensures the security of the data transmission between the base station 110 and the self-moving devices 200 by setting up a plurality of transmission paths; even if the transmission of a certain path is cut off, no interference is caused to other transmission paths, so that the base station 110 achieves more secure management.

The self-moving device 200 is an intelligent lawn mower. Each intelligent lawn mower has a mobile station 120. Each intelligent lawn mower has an independent working area. For example, a base station 110 is established in a community, and each household has a self-moving device. Preferably, the self-moving devices are intelligent robots or intelligent power devices, such as intelligent weeders and intelligent lawn mowers. The self-moving device of each household in the community may establish communication with the base station 110, thereby achieving differential global positioning. In this way, the positioning of the self-moving devices in the area is effectively achieved, and the cost is greatly reduced.

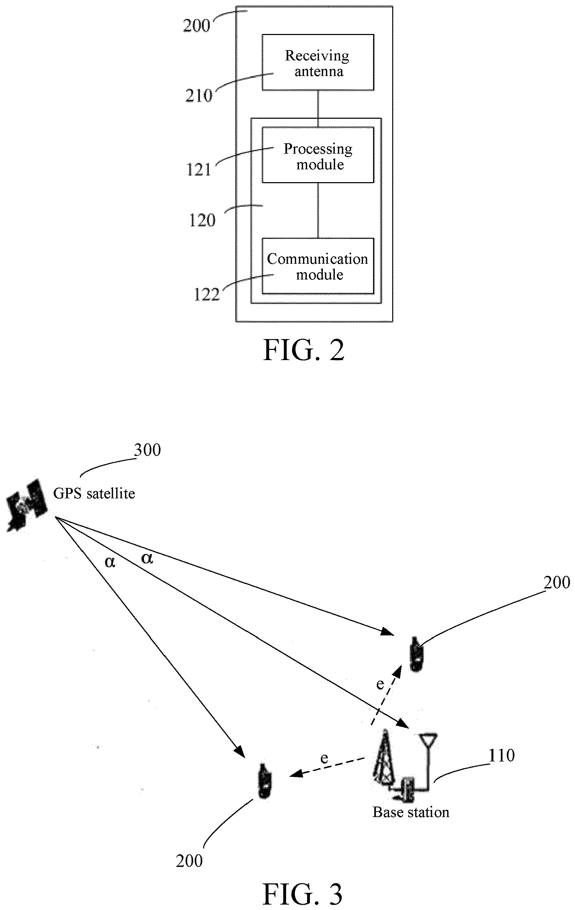

In one embodiment, as shown in FIG.2, the base station 110 further includes a receiving antenna 112 for receiving the GPS positioning signal, a sending module 113 for transmitting the differential correction data to the mobile stations 120, and a control module 114 for calculating the differential correction data, storing the code of the plurality of mobile stations 120, and controlling the sending module 113 to send the differential correction data to the different mobile stations 120 according to the code. Preferably, the coverage of the base station is within a radius of 50 kilometers to ensure accurate positioning of each intelligent device.

In an embodiment, the number of the intelligent devices 120 arranged in the coverage of the base station 110 is not more than 1000, so as to prevent communication congestion caused by an excessive number of intelligent devices within the coverage of the base station 110, thereby ensuring operational stability of the base station 110 and the positioning accuracy of each self-moving device 100.

FIG. 2 is a schematic diagram illustrating the structure of a self-moving device equipped with a differential global positioning system according to an embodiment of the present invention. A self-moving device 200 is provided with a mobile station 120, and the self-moving device 200 further includes a receiving antenna 210 for receiving a GPS positioning signal, where the GPS positioning signal is a global satellite-based positioning signal, such as GPS, Beidou or Galileo, and the like for obtaining global positioning information. In addition, the mobile station 120 further includes a communication module 122 and a processing module 121. The communication module 122 is configured to establish communication with the base station 110 to receive differential correction data, and the processing module 121 is connected to the receiving antenna 210 and the communication module 122 for processing the received GPS positioning signal and differential correction data for implementing high-accuracy positioning. In the differential global positioning system, one base station 110 can implement positioning of multiple self-moving devices, thereby greatly reducing the cost of positioning the self-moving devices.

In an embodiment, the self-moving device 200 further includes an inertial navigation system for outputting accurate positioning data for navigation when there are obstacles and satellite signals are not good. The inertial navigation system measures an acceleration and angular velocity of the self-moving device 200, integrates over time the acceleration, and transforms the acceleration to the navigation coordinate system to obtain the information of the velocity, yaw angle, location. Therefore, in mountain areas or forest areas with poor communication signals and unfavorable conditions, the inertial navigation system may be used for accurate positioning for the self-moving device 200 to make the differential global positioning system more applicable and more accurate.

It can be further understood that the self-moving device 200 may be an intelligent lawn mower, an intelligent lawn trimmer, and an intelligent weeder, but is not limited to the listed machines.

FIG. 3 is a schematic diagram illustrating the operation of the differential global positioning system. As shown in FIG. 3, the base station 110 and the self-moving devices 200 receive GPS positioning signals from the GPS satellite 300 to determine the locations of GPS positioning. The base station 110 calculates differential correction data e according to a measurement error between the accurate position thereof and the location of the GPS positioning, and transmits the differential correction data e to the self-moving devices 200. The self-moving device 200 calculate the accurate positioning locations thereof according to the received GPS satellite signals and the received differential correction data e. Normally, an angle α at the GPS satellite between the base station 110 and the self-moving device 200 is not more than 0.3 degree. Therefore, the self-moving device 200 processes according to the differential correction data e sent by the base station 110, and the error is small within an acceptable range. Further, a distance between the base station and the GPS satellite is equal to a distance between the self-moving device and the GPS satellite, and the corrected positioning data of the self-moving device is most accurate at this time.

Further, the base station 110 can be in communication with a plurality of self-moving devices 200 at the same time, so that when the plurality of self-moving devices 200 work at the same time, the accurate positioning of the intelligent devices can be implemented, thereby greatly reducing the cost of the accurate positioning.

Further, a positioning method of a differential global positioning system of the present invention is described below. The differential global positioning system including a base station 110, where the base station 110 is configured to set first positioning data thereof when the base station is located at a fixed location, and includes an analysis module. The base station 110 is in communication connection with at least one intelligent device, and each self-moving device includes a processing module. The positioning method of a differential global positioning system includes at least the following steps:
Step 1: data acquisition: obtaining second positioning data of the base station according to a GPS positioning signal sent by a satellite-based positioning system, and transmitting the first positioning data and the second positioning data to the analysis module of the base station; and
Step 2: data analysis: receiving and analyzing, by the analysis module of the base station, the first positioning data and the second positioning data in the step 1 to obtain differential correction data of the base station, and transmitting the obtained differential correction data to the processing module of the intelligent device.

Further, the positioning method includes step 3: data processing: receiving, by the processing module of the intelligent device, the differential correction data, and correcting, according to the differential correction data, positioning data of the corresponding intelligent device at a current location obtained by the corresponding intelligent device by receiving the satellite-based positioning signal.

Further, at least one intelligent device includes an encoding module, and the encoding module is configured to encode the corresponding intelligent device to obtain a code; and the step 2 further includes: when the analysis module of the base station obtains the differential correction data of the base station through analysis, determining, by the base station, whether to transmit the differential correction data to the corresponding intelligent device according to whether the code matches preset data information of the base station.

Further, the base station includes a sending module for sending the differential correction data to the intelligent device, and a control module for storing the code of the intelligent device, and controlling whether the sending module sends the differential correction data to the intelligent device according to the code provided by the intelligent device.

Further, the intelligent device includes a control module, and the positioning method further includes step 4: instruction issuing: feeding back the positioning data corrected by the intelligent device to the instruction module, and controlling, by the instruction module, a moving path of the intelligent device, and sending out an execution instruction.

Further, the intelligent device includes an execution module, and the positioning method further includes step 5: instruction execution: receiving, by the execution module, the instruction issued by the instruction module, and triggering the intelligent device to travel according to the obtained moving path.

Further, the differential global positioning system includes at least two transmission paths for transmitting the differential correction data to the corresponding intelligent devices, and between the step 2 and the step 3, the method further includes: sending, by the corresponding intelligent device, an instruction to the base station to request for the differential correction data, and receiving, by the base station, the instruction, and instructing the corresponding intelligent device according to the different self-moving device to obtain the correct differential correction data through a corresponding transmission path.

The embodiments above merely represent several embodiments of the present invention, and the description thereof is specific and detailed, but is not to be construed as a limitation on the protection scope of the present invention. It should be noted that any person skilled in the art may make some variations and modifications without departing from the scope of the present invention as defined by the attached claims.

## Claims

1. An intelligent device, wherein the intelligent device is a self-moving lawn mower and comprises a shell and a mobile station (120) connected to the shell, and the intelligent device is configured to be, via the mobile station (120), in communication connection with a base station (110),
wherein the mobile station (120) is is configured to be detachably connected with the intelligent device such that when the mobile station (120) is installed in the shell, positioning data of the intelligent device at a current location is obtained, and when the mobile station (120) is located outside of the shell and located at a specific location, positioning data at the specific location is obtained; and
wherein the intelligent device comprises receivers integrated on the mobile station configured to receive respectively:
satellite-based positioning signals sent by a satellite-based positioning system to obtain positioning data of the corresponding intelligent device at a current location, and
differential correction data sent by the base station.

2. The intelligent device according to claim 1 wherein the satellite-based positioning signals comprise a GPS positioning signal, the intelligent device including a receiving antenna (210) configured to receive the GPS positioning signal, where the GPS positioning signal is a global satellite-based positioning signal for obtaining positioning data.

3. The intelligent device according to claim 2, wherein the mobile station (120) further includes a communication module (122) and a processing module (121), wherein the communication module (122) is configured to establish communication with the base station (110) and the processing module is connected to the receiving antenna (210) and the communication module (122) for processing the received signals to implement high accuracy positioning.

4. The intelligent device according to any one of claims 1-3, wherein the intelligent device includes an inertia navigation system.

5. The intelligent device according to claim 4, wherein the inertia navigation system is configured to measure an acceleration and angular velocity of the intelligent device, integrate over time the acceleration, and transform the acceleration to the navigation coordinate system to obtain information of the velocity, yaw angle and location.

6. The intelligent device according to any one of claims 1-5, wherein the intelligent device includes an encoding module for the corresponding intelligent device to obtain a code.

7. The intelligent device of claim 6, wherein the encoding module is disposed on the mobile station (120) or independently of the mobile station (120) on the intelligent device.

8. The intelligent device according to any one of claims 1-7, wherein the intelligent device is equipped with a differential global positioning system.

9. A differential global positioning system (100) comprising at least one intelligent device according to any one of claims 1-8 and the base station (110).

## Patentansprüche

1. Intelligente Vorrichtung, wobei die intelligente Vorrichtung ein selbstbewegender Rasenmäher ist und eine Hülle und eine mit der Hülle verbundene Mobilstation (120) umfasst, und die intelligente Vorrichtung so konfiguriert ist, dass sie, über die Mobilstation (120), in Kommunikationsverbindung mit einer Basisstation (110) steht,
wobei die Mobilstation (120) so konfiguriert ist, dass sie abnehmbar mit der intelligenten Vorrichtung verbunden ist, sodass, wenn die Mobilstation (120) in der Hülle installiert ist, Positionierungsdaten der intelligenten Vorrichtung bei einem aktuellen Standort erhalten werden, und wenn die Mobilstation (120) sich außerhalb der Hülle befindet und sich bei einem spezifischen Standort befindet, Positionierungsdaten bei dem spezifischen Standort erhalten werden; und
wobei die intelligente Vorrichtung auf der Mobilstation integrierte Empfänger umfasst, die so konfiguriert sind, dass sie jeweils Folgendes empfangen:
Satelliten-basierte Positionierungssignale, die von einem Satelliten-basierten Positionierungssystem gesendet werden, um Positionierungsdaten der entsprechenden intelligenten Vorrichtung bei einem aktuellen Standort zu erhalten, und
Differentialkorrekturdaten, die von der Basisstation gesendet werden.

2. Intelligente Vorrichtung nach Anspruch 1, wobei die Satelliten-basierten Positionierungssignale ein GPS-Positionierungssignal umfassen, die intelligente Vorrichtung eine Empfangsantenne (210) beinhaltet, die so konfiguriert ist, dass sie das GPS-Positionierungssignal empfängt, wo das GPS-Positionierungssignal ein globales Satelliten-basiertes Positionierungssignal ist, um Positionierungsdaten zu erhalten.

3. Intelligente Vorrichtung nach Anspruch 2, wobei die Mobilstation (120) weiter ein Kommunikationsmodul (122) und ein Verarbeitungsmodul (121) beinhaltet, wobei das Kommunikationsmodul (122) so konfiguriert ist, dass es Kommunikation mit der Basisstation (110) einrichtet und das Verarbeitungsmodul mit der Empfangsantenne (210) und dem Kommunikationsmodul (122) zum Verarbeiten der empfangenen Signale verbunden ist, um hochpräzise Positionierung zu implementieren.

4. Intelligente Vorrichtung nach einem der Ansprüche 1-3, wobei die intelligente Vorrichtung ein Trägheitsnavigationssystem beinhaltet.

5. Intelligente Vorrichtung nach Anspruch 4, wobei das Trägheitsnavigationssystem so konfiguriert ist, dass es eine Beschleunigung und Winkelgeschwindigkeit der intelligenten Vorrichtung misst, die Beschleunigung über die Zeit integriert und die Beschleunigung auf das Navigationskoordinatensystem transformiert, um Informationen über die Geschwindigkeit, den Scherwinkel und den Standort zu erhalten.

6. Intelligente Vorrichtung nach einem der Ansprüche 1-5, wobei die intelligente Vorrichtung ein Codierungsmodul für die entsprechende intelligente Vorrichtung beinhaltet, um einen Code zu erhalten.

7. Intelligente Vorrichtung nach Anspruch 6, wobei das Codierungsmodul auf der Mobilstation (120) oder unabhängig von der Mobilstation (120) auf der intelligenten Vorrichtung angeordnet ist.

8. Intelligente Vorrichtung nach einem der Ansprüche 1-7, wobei die intelligente Vorrichtung mit einem differentiellen globalen Positionierungssystem ausgestattet ist.

9. Differentielles globales Positionierungssystem (100), das mindestens eine intelligente Vorrichtung nach einem der Ansprüche 1-8 und die Basisstation (110) umfasst.

## Revendications

1. Dispositif intelligent, dans lequel le dispositif intelligent est une tondeuse à gazon à déplacement autonome et comprend une coque et une station mobile (120) raccordée à la coque, et le dispositif intelligent est configuré pour être, par l'intermédiaire de la station mobile (120), en raccordement de communication avec une station de base (110),
dans lequel la station mobile (120) est configurée pour être raccordée de manière détachable au dispositif intelligent de sorte que, lorsque la station mobile (120) est installée dans la coque, des données de positionnement du dispositif intelligent à un emplacement actuel sont obtenues, et lorsque la station mobile (120) est située à l'extérieur de la coque et située à un emplacement spécifique, des données de positionnement à l'emplacement spécifique sont obtenues ; et
dans lequel le dispositif intelligent comprend des récepteurs intégrés à la station mobile configurés pour recevoir respectivement :
des signaux de positionnement par satellite envoyés par un système de positionnement par satellite pour obtenir des données de positionnement du dispositif intelligent correspondant à un emplacement actuel, et
des données de correction différentielle envoyées par la station de base.

2. Dispositif intelligent selon la revendication 1, dans lequel les signaux de positionnement par satellite comprennent un signal de positionnement GPS, le dispositif intelligent incluant une antenne de réception (210) configurée pour recevoir le signal de positionnement GPS, dans lequel le signal de positionnement GPS est un signal de positionnement global par satellite permettant d'obtenir des données de positionnement.

3. Dispositif intelligent selon la revendication 2, dans lequel la station mobile (120) inclut en outre un module de communication (122) et un module de traitement (121), dans lequel le module de communication (122) est configuré pour établir une communication avec la station de base (110) et le module de traitement est raccordé à l'antenne de réception (210) et au module de communication (122) pour traiter les signaux reçus afin de mettre en oeuvre un positionnement de haute précision.

4. Dispositif intelligent selon l'une quelconque des revendications 1-3, dans lequel le dispositif intelligent inclut un système de navigation par inertie.

5. Dispositif intelligent selon la revendication 4, dans lequel le système de navigation par inertie est configuré pour mesurer une accélération et une vitesse angulaire du dispositif intelligent, intégrer l'accélération dans le temps et transformer l'accélération en système de coordonnées de navigation pour obtenir des informations sur la vitesse, l'angle de lacet et l'emplacement.

6. Dispositif intelligent selon l'une quelconque des revendications 1-5, dans lequel le dispositif intelligent inclut un module de codage pour que le dispositif intelligent correspondant obtienne un code.

7. Dispositif intelligent selon la revendication 6, dans lequel le module de codage est disposé sur la station mobile (120) ou indépendamment de la station mobile (120) sur le dispositif intelligent.

8. Dispositif intelligent selon l'une quelconque des revendications 1-7, dans lequel le dispositif intelligent est équipé d'un système de positionnement global différentiel.

9. Système de positionnement global différentiel (100) comprenant au moins un dispositif intelligent selon l'une quelconque des revendications 1-8 et la station de base (110).
